Europäisches Patentamt

European Patent Office

Office européen des brevets

(19)

(11) Veröffentlichungsnummer : **0 170 722**
**B1**

(12) **EUROPÄISCHE PATENTSCHRIFT**

(45) Veröffentlichungstag der Patentschrift :
07.06.89

(51) Int. Cl.⁴ : **G 02 C  1/02**

(21) Anmeldenummer : **84113070.1**

(22) Anmeldetag : **30.10.84**

(54) **Brille mit einer Befestigungsvorrichtung.**

(30) Priorität : **07.08.84 DE 3429071**

(43) Veröffentlichungstag der Anmeldung :
**12.02.86 Patentblatt 86/07**

(45) Bekanntmachung des Hinweises auf die Patenterteilung : **07.06.89 Patentblatt 89/23**

(84) Benannte Vertragsstaaten :
**AT BE CH DE FR GB IT LI LU NL SE**

(56) Entgegenhaltungen :
**EP–A– 0 034 501**
**DE–A– 2 136 802**
**DE–U– 7 614 516**
**US–A– 1 982 047**
**US–A– 4 187 007**
**US–A– 4 245 896**

(73) Patentinhaber : **EYEMETRICS-SYSTEMS AG**
**Steinbockstrasse 4**
**CH-7001 Chur (CH)**

(72) Erfinder : **Wiedmann, Helmut**
**Hundsbergstrasse 29**
**D-7100 Heilbronn (DE)**
  Erfinder : **Czech, Günther**
  **Heinrich-Hertz Strasse 4/1**
  **D-7024 Filderstadt 4 (DE)**

(74) Vertreter : **Grams, Klaus Dieter, Dipl.-Ing. et al**
**Patentanwaltsbüro Tiedtke-Bühling-Kinne- Grupe-**
**Pellmann-Grams-Struif Winter-Roth Bavariaring 4**
**D-8000 München 2 (DE)**

**Beschreibung**

Die Erfindung bezieht sich auf eine Brille mit einer Befestigungsvorrichtung gemäß dem Oberbegriff von Patentanspruch 1.

Insbesondere bei randlosen Brillen sind verschiedene Möglichkeiten zum Verbinden der Scheiben- bzw. Brillengläser mit den übrigen Teilen der Brille, insbesondere deren Brücke und Backen bzw. Bügel-Gelenkstücken bekannt. Beispielsweise können die letztgenannten Einzelteile mit der Scheibe verschraubt werden (DE-GM 83 17 983.6). Bei einer solchen herkömmlichen Befestigungsvorrichtung unter Verwendung von Schrauben ist entweder die Lage der Schraubenachse durch die Krümmung der Brillenglasoberfläche bestimmt, auf der der Schraubenkopf anliegt, oder steht der Schraubenkopf nur in Punktberührung mit dem Brillenglas, wenn der Verlauf der Schraubenachse nicht durch die Krümmung der Brillenglasoberfläche, sondern durch die gewünschte Ausrichtung der Brücke bzw. Backe bestimmt ist. Sowohl eine solche Punktberührung als auch eine von der Oberflächenkrümmung abhängige Schrauben- und damit Backen- bzw. Brückenausrichtung sind ungünstig.

Es ist ferner bekannt (DE-GM 76 14 516) das Brillenglas an der Brücke bzw. Backe mit Hilfe eines Stiftes zu befestigen, dessen Kopfunterseite entsprechend der Brillenglaskrümmung abgeschrägt ist, wobei zwischen dem Brillenglas und der Brücke bzw. Backe ein elastischer Zwischenring angeordnet ist. Dies erfordert jedoch je nach Brillenglaskrümmung unterschiedlich ausgebildete Stifte und ermöglicht es nicht, mit lediglich einem Stift eine genaue Lagezuordnung zwischen dem Brillenglas und dem Einzelteil aufrechzuhalten, und zwar teilweise deswegen, weil der elastische Zwischenring für eine gewisse Unbestimmtheit sorgt. Von diesem Stand der Technik wird im Oberbegriff des Anspruchs 1 ausgegangen.

Ferner ist es bekannt (EP-AS 0 034 501), die Befestigung des Brillenglases am Einzelteil mittels eines abgeknickten Kunststoffstiftes dadurch zu bewirken, daß der Stift aufgrund seiner Abknickung mit der Unterseite seines Kopfes flächig auf der gekrümmten Brillenglasoberfläche anliegt, wobei zur Abstützung des Brillenglases auf der vom Stiftkopf abgewandten Seite ein der Brillenglaskrümmung folgendes, zusätzliches Stützelement vorgesehen ist. Aufgrund dieses Stützelementes muß somit eine Anpassung des Einzelteils an die jeweilige Brillenglaskrümmung vorgesehen sein.

Aus der US-PS 4 187 007 ist bekannt, ein gekrümmtes Brillenglas an einem Halbbalken mit Hilfe von zwei Befestigungsvorrichtungen zu befestigen, die jeweils einen am Halbbalken befestigten Gewindestift und eine auf diesen geschraubte Kopfmutter umfassen.

Zwischen dem Halbbalken und dem Brillenglas ist ein Vorsprung in Form einer auf den Gewindestift gesetzten Hülse angeordnet, der in einer Bohrungserweiterung sitzt, die am einen Ende einer den Gewindestift aufnehmenden Bohrung im Brillenglas ausgebildet ist. Zwischen dem Kopf der Kopfmutter und der vom Halbbalken abgewandten Oberfläche des Brillenglases ist ein elastischer Dichtungsring angeordnet. Mittels der Hülse ist das Brillenglas am Halbbalken abgestützt, wobei jedoch die Hülse für einen gewissen Abstand sorgt, so daß nicht die Krümmung der dem Halbbalken zugewandten Oberfläche des Brillenglases die Relativlage zwischen dem Halbbalken und dem Brillenglas bestimmt. Eine hinreichend steife Verbindung wird jedoch auf diese bekannte Weise nicht erreicht, da der zur Anpassung an verschiedene Krümmungen der vom Halbbalken abgewandten Oberfläche des Brillenglases vorgesehene elastische Ring zwangsläufig noch gewisse Relativbewegungen zwischen dem Brillenglas und dem Halbbalken zuläßt. Darüber hinaus ermöglicht diese bekannte Art der Befestigung noch eine Relativdrehung zwischen Halbbalken und Brillenglas um die Achse des Gewindestiftes. Aus diesem Grunde sind auch im bekannten Fall für jedes Brillenglas zwei derartige Befestigungsvorrichtungen vorgesehen. Für die Verbindung zwischen einer Brücke oder Backe einerseits und einem Brillenglas andererseits mit Hilfe nur eines Stiftes, die verhältnismäßig steif sein muß, eignet sich die bekannte Befestigungsvorrichtung nicht.

Durch die US-PS 4 245 896 ist eine ähnliche Brille bekannt, bei der der Schenkel auf der Vorderseite des Brillenglases angeordnet ist, während das Verbindungselement, das als Mutter ausgebildet ist und auf den mit einem Gewinde versehenen Stift geschraubt ist, auf der Rückseite des Glases angeordnet ist. Die Drehsicherung besteht aus einer quer zur Bohrung verlaufenden, länglichen Ausnehmung, in die ein entsprechend geformtes, stabförmiges Element am Schenkel eingreift. Bei dieser bekannten Brille ist die Ausrichtung, die die Brücke bzw. Backe hat, durch die Krümmung der Vorderseite des Brillenglases bestimmt, an der der Schenkel anliegt. Dies ist im Falle von nicht korrigierenden Sonnenbrillengläsern, um die es sich im Falle der US-PS 4 245 896 handelt, weniger störend. Bei korrigierenden Brillengläsern führt dies jedoch je nach Krümmung der Vorderseite der Brillengläser zu anderer Geometrie der Brille bzw. macht es erforderlich, nachträglich Korrekturen vorzunehmen, sofern diese überhaupt möglich sind, oder zahlreiche verschiedene Backen und Brücken vorzusehen, die sich durch den Verlauf des Schenkels relativ zum übrigen Einzelteil in Anpassung an unterschiedliche Krümmungen unterscheiden. Es versteht sich, daß dies nachteilig ist. Obwohl die Befestigungsvorrichtung dieser bekannten Brille aufgrund ihrer Drehsicherung grundsätzlich für jede Verbindung zwischen einem Einzelteil und einem Brillenglas mit nur einem Stift auskommen kann, reicht die Steifigkeit der mittels der Befestigungsvorrichtung geschaffenen Verbindungen für zahlreiche Anwendungsfälle nicht aus.

Der Erfindung liegt die Aufgabe zugrunde, die gattungsgemäße Brille derart weiterzubilden, daß die Verbindung zwischen dem Einzelteil und dem Brillenglas auch dann möglichst steif und zuverlässig ist, wenn nur ein Stift zur Anwendung kommt. Dabei sollen unterschiedlich gekrümmte Vorderseiten und unterschiedlich gekrümmte Rückseiten sowie unterschiedliche Dicken des Brillenglases in dessen Randbereich möglichst wenig Einfluß auf die Ausbildung der Befestigungsvorrichtung haben und möglichst wenig Anpassungsarbeiten erfordern.

Dies heißt mit anderen Worten, daß die Brille mit einer Befestigungsvorrichtung versehen werden soll, die hinsichtlich Steifigkeit und Festigkeit der Verbindung hohe Anforderungen erfüllt, zugleich aber universell anwendbar ist und unterschiedliche Krümmungen von Vorderseite und Rückseite des Brillenglases sowie unterschiedliche Brillenglasdicken im Randbereich zuläßt.

Diese Aufgabe wird erfindungsgemäß durch die Merkmale im kennzeichnenden Teil von Patentanspruch 1 gelöst.

Bei der erfindungsgemäßen Brille stützt sich das Brillenglas nicht unmittelbar mit seiner Vorder- oder Rückseite am Schenkel ab, sondern ist das Brillenglas zwischen dem Kopfteil (im folgenden auch Verbindungselement genannt) und dem ersten Vorsprung eingespannt. Der Vorsprung und das Verbindungselement greifen an den Oberflächen der beiden Bohrungserweiterungen an, so daß nicht mehr die Krümmung und der Verlauf der dem Schenkel zugewandten Seite des Brillenglases die Ausrichtung des Einzelteils relativ zum Brillenglas bestimmen, sondern diese Ausrichtung durch die Bohrungserweiterungen bestimmt ist. Dies ermöglicht es, für Brillengläser mit unterschiedlichen Dicken im Randbereich und mit unterschiedlichen Krümmungen sowohl auf der Vorderseite als auch auf der Rückseite trotz Verwendung ein und desselben Einzelteils immer die gleiche Ausrichtung desselben relativ zum jeweiligen Brillenglas dadurch herbeizuführen, daß bei der Ausbildung der dem Schenkel zugewandten Bohrungserweiterung die Krümmung der dem Schenkel zugewandten Seite berücksichtigt wird. Das heißt mit anderen Worten, daß diese Bohrungserweiterung mehr oder weniger tief ausgebildet wird.

Außerdem besteht die Möglichkeit durch Wahl zwischen einer zur Bohrungsachse konzentrischen und einer diesbezüglichen exzentrischen Ausbildung der zweiten Bohrungserweiterung die Ausrichtung des Einzelteils zu beeinflussen. Unterschiedliche Dicke im Randbereich des Brillenglases kann durch unterschiedlich tiefe Ausbildung einer oder beider Bohrungserweiterungen und/oder durch entsprechende Länge des Stiftes berücksichtigt werden.

Die Einspannung des Brillenglases zwischen dem Verbindungselement und dem Vorsprung und der Kraftangriff des Verbindungselementes und des Vorsprungs an den Oberflächen von zwei Bohrungserweiterungen führen zu einer steifen und festen Verbindung zwischen dem Schenkel bzw. Einzelteil in Längsrichtung des Stiftes und gegen Drehungen um zur Längsachse des Stiftes senkrechte Achsen. Die Drehsicherung gegen Drehungen um die Längsachse des Stiftes besteht aus dem zweiten Vorsprung und dem dritten Vorsprung, die beide am Rand des Brillenglases angreifen und auf diese Weise einen verhältnismäßig großen Abstand zur Längsachse des Stiftes haben, so daß sie gegen Drehungen um diese Achse ein verhältnismäßig großes Gegenmoment bewirken. Zusammen mit dem Verbindungselement und dem ersten Vorsprung bilden der zweite und der dritte Vorsprung eine Vierpunktlagerung bzw. abstützung für das Brillenglas und das Einzelteil relativ zueinander. Dabei ist diese Befestigungsvorrichtung für zahlreiche unterschiedliche Brillengläser unverändert benutzbar, da die Unterschiede der Brillengläser durch die Ausbildung der Bohrungserweiterungen an diesen und gegebenenfalls durch die Länge des Stiftes berücksichtigbar sind.

In vorteilhafter Ausführung der Erfindung kann vorgesehen sein, daß die Oberflächen der beiden Bohrungserweiterungen Kugelabschnitte sind und daß das Verbindungselement insgesamt Kugelform hat und einstückig mit dem Stift ausgebildet ist. Dies ermöglicht es, den Durchmesser des Verbindungselementes nur wenig größer als den Durchmesser des Stiftes zu machen und dennoch eine hinreichend große Berührungsfläche zwischen dem Verbindungselement und der zugeordneten Bohrungserweiterung zu gewährleisten. Die auch nach außen abgerundete Ausbildung des Verbindungselementes paßt im Aussehen zu jeder beliebigen Krümmung der Brillenglasseite auf der sich das Verbindungselement befindet, so daß dieses ohne Beeinträchtigung des Aussehens der Brille vorzugsweise auf der Vorderseite des Brillenglases angeordnet ist. In weiterer vorteilhafter Ausgestaltung der Erfindung kann vorgesehen sein, daß der Stift und der Schenkel getrennt voneinander ausgebildet sind und die Verbindung zwischen der für den Stift im Schenkel vorgesehenen Öffnung und dem zugeordneten Endabschnitt des Stiftes eine durch Einstecken bzw. Einschieben herbeiführbare Verbindung wie beispielsweise eine Klebeverbindung oder eine Rastverbindung ist. Dies vereinfacht erheblich die Montagearbeiten beim Verbinden des Einzelteils mit dem Brillenglas. Ähnlich gestaltet sich die Montage, wenn die genannte Öffnung eine Durchgangsbohrung ist und das aus dieser vorstehende Ende des Stiftes zu einem Nietkopf abgeflacht wird.

Weitere vorteilhafte Ausgestaltungen der Erfindung sind in den Unteransprüchen gekennzeichnet.

Ausführungsbeispiele der Erfindung sind in den Zeichnungen dargestellt und werden im folgenden näher erläutert. Es zeigen :

Fig. 1 eine ausschnittsweise Darstellung, teilweise im Schnitt, einer Brille, wobei der Ausschnitt eine Backe derselben und einen mit der Backe verbundenen Randbereich eines Brillenglases der Brille zeigt ;

Fig. 2 eine Frontansicht zu Fig. 1 bei Betrachtung in Richtung X;

Fig. 3 eine vergrößerte Darstellung einer Einzelheit E in Fig. 1 im Schnitt;

Fig. 4 eine Seitenansicht zu Fig. 1 bei Betrachtung in Richtung Y;

Fig. 5 eine Fig. 1 ähnliche Darstellung eines zweiten Ausführungsbeispieles;

Fig. 6 eine Fig. 2 ähnliche Darstellung der zweiten Ausführungsform bei Betrachtung in Richtung Z;

Fig. 7 eine Ansicht eines Verankerungsteils der zweiten Ausführungsform;

Fig. 8 eine Fig. 4 ähnliche Seitenansicht des zweiten Ausführungsbeispiels bei Betrachtung in Richtung W; und

Fig. 9 eine abgewandelte Ausführungsform einer Zwischenauflage.

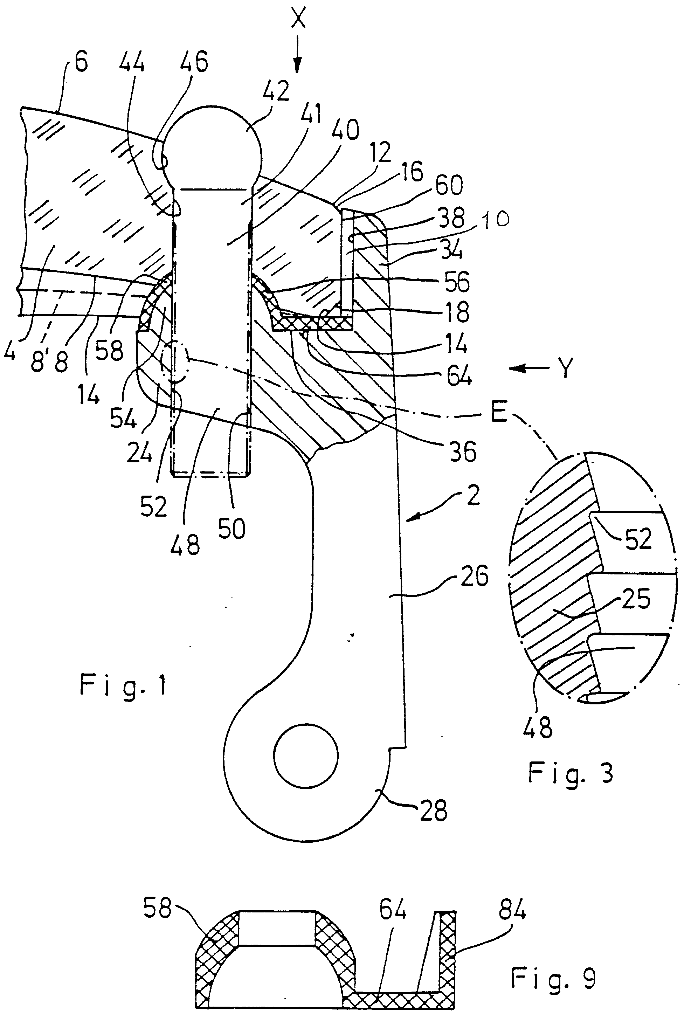

Im folgenden wird zunächst die erste Ausführungsform anhand der Figuren 1 bis 3 näher erläutert. In diesen Figuren ist eine Backe 2 erkennbar, die mit Hilfe einer noch ausführlicher zu beschreibenden Befestigungsvorrichtung mit einem Brillenglas 4 einer Brille verbunden ist, von der weitere Elemente nicht dargestellt sind. Die Backe 2, die auch als Bügel-Gelenkstück bezeichnet werden kann, ist hier als Einzelteil gewählt, anhand dessen die Erfindung erläutert wird. Die folgende Beschreibung der Ausführungsbeispiele dient sinngemäß für alle mit einem Brillenglas zu verbindenden Einzelteile, also insbesondere auch für eine Brücke.

Das dargestellte Brillenglas 4 ist ein Plusglas mit einer gekrümmten Vorderseite 6 sowie einer gekrümmten Rückseite 8, wobei die Krümmungen der Vorderseite 6 und der Rückseite 8 unterschiedlich sind. Radial außen ist das Brillenglas 4 durch einen Rand 10 begrenzt, der an einer vorderen Kante 12 und einer hinteren Kante 14 in die Vorderseite 6 bzw. die Rückseite 8 übergeht, wobei in dargestellter Weise an den Kanten Fasen 16 bzw. 18 vorgesehen sind. Dem Brillenglas 4 ist eine Brillenglasebene zugeordnet, die beispielsweise durch die hintere Kante 14 definiert sein kann und zu der der Rand 10 im wesentlichen senkrecht verläuft. Bei dem Werkstoff des Brillenglases 4 kann es sich sowohl um ein Kunststoffglas als auch um ein Mineralglas, beispielsweise ein Silikatglas, handeln.

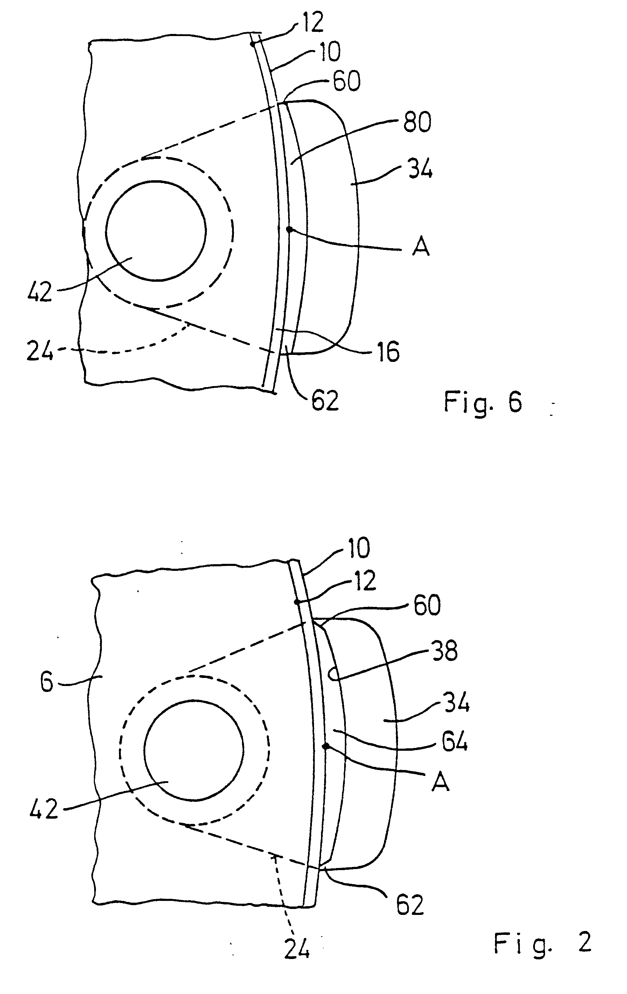

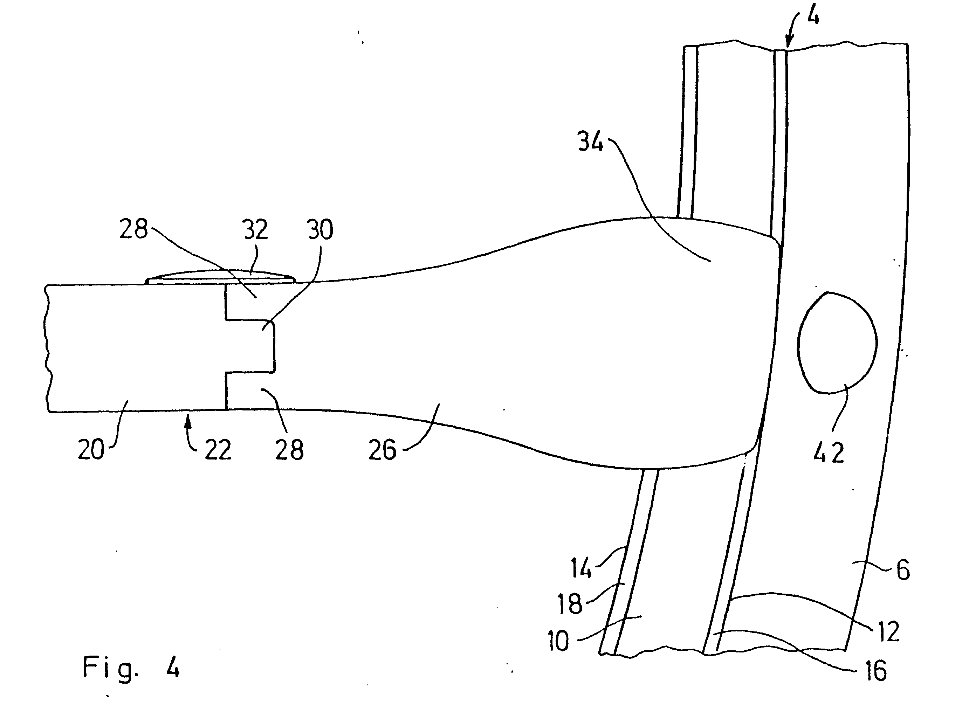

Die Backe 2 verbindet das Brillenglas 4 mit einem Bügel 20 (siehe Fig. 4), wobei zwischen dem Bügel 20 und der Backe 2 ein Gelenk 22 ausgebildet ist. Das Einzelteil in Form der Backe 2 umfaßt einen im wesentlichen parallel zur Brillenglasebene verlaufenden Schenkel 24, der einstückig ausgebildet ist mit einem im wesentlichen senkrecht zur Brillenglasebene nach hinten, d. h. nach unten in Fig. 1, verlaufenden Arm 26, an dessen in Fig. 2 unterem Ende zwei Gelenkaugen 28 der Gelenks 22 ausgebildet sind. Das Gelenk 22 wird vervollständigt durch ein am Bügel 20 ausgebildetes weiteres Gelenkauge 30 sowie einen Gelenkzapfen 32 (siehe Fig. 4). Am von den Gelenkaugen 28 abgewandten Ende des Armes 26 weist dieser eine über den Schenkel 24 nach vorn (bzw. oben in Fig. 1) vorstehende Verlängerung 34 auf. Diese Verlängerung reicht ungefähr bis zur vorderen Kante 12 des Brillenglases. Wie Fig. 4 erkennen läßt, hat der Arm 26 ungefähr im Bereich des Schenkels 24 seine größte Höhe. Der Schenkel 24, dessen Umriß in Fig. 2 gestrichelt erkennbar ist, hat, bei Betrachtung in Fig. 2, eine im wesentlichen dreieckige Form, wobei er sich weg vom Arm 26 verjüngt. Auf seiner dem Brillenglas 4 zugewandten Seite weist der Schenkel 24 eine im wesentlichen ebene Fläche 36 auf, die mit der Innenseite 38 der Verlängerung 34 im wesentlichen einen rechten Winkel einschließt (siehe Fig. 1).

Die Befestigungsvorrichtung, die das Brillenglas 14 mit dem Einzelteil in Form der Backe 2 verbindet, umfaßt einen geraden Stift 40, der an seinem vorderen, in Fig. 1 oberen Endabschnitt 41 einstückig ausgebildet ist mit einem Verbindungselement 42, das die Form einer Kugel hat. Im Brillenglas 4 ist in der Nähe von dessen Rand 10 eine zylindrische Bohrung 44 ausgebildet, die von der Vorderseite 6 zur Rückseite 8 des Brillenglases 4 führt. Am vorderseitigen Ende der Bohrung 44 weist diese eine zur Bohrungsachse konzentrische, rotationssymmetrische erste Bohrungserweiterung 46 auf, in der das Verbindungselement 42 sitzt. Die beiden einander berührenden Oberflächen der ersten Bohrungserweiterung 46 und des Verbindungselementes 42 sind jeweils Kugelflächenabschnitte. Auch die freie Oberfläche des Verbindungselementes 42 ist ein Kugelflächenabschnitt. Dieser ist beim dargestellten Ausführungsbeispiel auf der Vorderseite 6 des Brillenglases 4 sichtbar, über die er etwas hinausragt.

Der zylinderische Stift 40 verläuft durch die Bohrung 44 und ist mit seinem zweiten, in Fig. 1 unteren Endabschnitt 48 am Schenkel 24 befestigt. Zu diesem Zweck weist der Schenkel 24 eine zylinderische, gerade Öffnung 50 mit glatter Oberfläche auf. Die Öffnung 50 ist beim dargestellten Ausführungsbeispiel als Durchgangsöffnung ausgebildet, so daß sie an der Unterseite des Schenkels 24, die von der Rückseite 8 des Brillenglases 4 abgewandt ist, offen ist. Zur Verbindung zwischen dem zweiten Endabschnitt 48 des Stiftes 40 und der Öffnung 50 bzw. dem Schenkel 24 bestehen verschiedene Möglichkeiten. Es kommen sowohl Klemmverbindungen, Schraubverbindungen, bei denen sowohl der zweite Endabschnitt 48 als auch die Öffnung 50 mit entsprechenden Gewinden versehen sind, Klebeverbindungen als auch Rastverbindungen in Frage. Die letztgenannte Möglichkeit ist bei dem Ausführungsbeispiel gemäß den Figuren 1 bis 4 gewählt. Zu diesem Zweck ist der zweite Endabschnitt 48 mit Rastvorsprüngen 52 versehen (siehe Fig. 3), wogegen die Öffnung 50 eine glatte Oberfläche hat. Die Abmessungen der Öffnung 50 und des zweiten Endabschnitts 48 mit seinen umlaufenden Rastvorsprüngen 52 sind derart gewählt, daß sich die Rastvorsprünge 52 in die glatte Oberfläche der Öffnung 50 drücken und es zu einem Kaltfließen des Werkstoffs des Schenkels 24 kommt, so daß sich nach dem Einstecken des Stiftes 40 in die Öffnung 50 nach einer gewissen Zeit eine formschlüssige Verbindung ergibt. Dies ermöglicht es in günstiger Weise, den Stift 40 in beliebiger Axialstellung, d. h. stufenlos, am Schenkel 24 zu befestigen. Das am zweiten Endabschnitt 48 aus der Öffnung 50 vorstehende Ende des Stiftes 40 ist derart abgeschnitten, daß sich ein glatter Übergang zur Unterseite des Schenkels 24 ergibt.

Auf der der Rückseite 8 des Brillenglases 4 zugewandten Seite des Schenkels 24 ist einstückig an diesem ein erster Vorsprung 54 konzentrisch zur Öffnung 50 ausgebildet. Die Oberfläche des ersten Vorsprungs 54 bildet ein Kugelflächenabschnitt. Die Bohrung 44 im Brillenglas 4 ist am dem Schenkel 24 zugewandten Ende zu einer zweiten Bohrungserweiterung 56 erweitert, die konzentrisch und rotationssymmetrisch zur Achse der Bohrung 44 ausgebildet ist. Die Oberfläche der zweiten Bohrungserweiterung 56 ist ein Kugelflächenabschnitt, wobei die Oberfläche der zweiten Bohrungserweiterung 56 und die Oberfläche des ersten Vorsprungs 54 mit geringem Abstand von einander konzentrisch zueinander liegen. Zwischen diesen beiden Oberflächen ist eine dünne Zwischenschicht 58 aus elastischem Material angeordnet, so daß sich der erste Vorsprung 54 und die zweite Bohrungserweiterung 56 beim dargestellten Ausführungsbeispiel mittelbar über die Zwischenschicht 58 aneinander abstützen, wobei jedoch eine unmittelbare Abstützung bei Weglassung der Zwischenschicht 58 möglich ist.

An der Verlängerung 34 sind ein zweiter Vorsprung 60 in Form einer Leiste und ein dritter Vorsprung 62 in Form einer Leiste ausgebildet. Die beiden Vorsprünge 60 und 62 liegen — bei Betrachtung in Umfangsrichtung des Brillenglases 4 — am einen bzw. am anderen Ende der Verlängerung 34. Wie in Fig. 2 erkennbar ist, hat der Rand 10 des Brillenglases 4 einen der Bohrung 44 nächsten Punkt A. Bezüglich dieses Punktes A sind der zweite Vorsprung 60 auf der einen und der dritte Vorsprung 62 auf der anderen Seite angeordnet (bei Betrachtung in Umfangsrichtung des Brillenglases 4). Die den zweiten und dritten Vorsprung bildenden Leisten verlaufen in etwa senkrecht zur Brillenglasebene und liegen mit einer Kante am Rand 10 an. Im übrigen hat die Innenseite 38 der Verlängerung 34 beim dargestellten Ausführungsbeispiel einen gewissen Abstand vom Rand 10. Sie könnte allerdings auch zwischen den beiden Vorsprüngen 60 und 62 unmittelbar entlang dem Rand verlaufen; ebenso ist es auch möglich, daß sich der zweite Vorsprung und der dritte Vorsprung mittelbar über eine der Zwischenschicht 58 ähnliche elastische Zwischenschicht am Rand 10 abstützen. Eine solche elastische Zwischenschicht würde ebenso wie die Zwischenschicht 58 dazu dienen, Spannungskonzentrationen im Berührungsbereich der aneinander anliegenden Elemente bzw. Teile vorzubeugen und für eine Vergleichmäßigung der Belastung zu sorgen. Beim in den Figuren 1 bis 3 dargestellten Ausführungsbeispiel ist das Brillenglas 4 zusätzlich mit seiner Kante 14 am Schenkel 24 abgestützt, und zwar an dessen Fläche 36. Diese Abstützung ist eine mittelbare, weil sich zwischen der Kante 14 und der Fläche 36 noch eine weitere Zwischenschicht 64 aus weichem, elastischem Material befindet, die zusammen mit der Zwischenschicht 58 eine Zwischenauflage bildet.

Die auf vorstehend beschriebenen Weise ausgebildete Brille wird in folgender Weise montiert.

Im Brillenglas 4 wird zunächst die Bohrung 44 ausgebildet, deren Lage bezüglich des Randes 10 durch die Lage der Öffnung 50 im Schenkel 24 relativ zum zweiten Vorsprung 60 und zum dritten Vorsprung 62 vorgegeben ist. Obwohl beim dargestellten Ausführungsbeispiel die Achsen der Bohrung 44 und der Öffnung 50 zusammenfallen, können diese Achsen auch relativ zueinander parallel versetzt sein und/oder sich schneiden, da die gewünschte Ausrichtung (Öffnungswinkel und Neigungswinkel) relativ zum Brillenglas 4 bzw. der Brillenglasebene im wesentlichen durch die Bohrungserweiterungen 46 und 56 bestimmt ist. Zugleich mit der Ausbildung der Bohrung 44 oder im Anschluß daran wird die zweite Bohrungserweiterung 56 ausgebildet, wobei bei der Ausbildung der Bohrungserweiterung 56 die Krümmung der Rückseite 8 des Brillenglases 4 berücksichtigt wird. Wenn die Rückseite 8 beispielsweise flacher gekrümmt ist und den Verlauf der gestrichelt dargestellten Rückseite 8 hat, ergibt die zweite Bohrungserweiterung 56 im Brillenglas 4 eine tiefere Ausnehmung, als wenn die Rückseite stärker gekrümmt ist und den mit ausgezogenen Linien dargestellten Verlauf hat (Rückseite 8). Dies heißt mit anderen Worten, daß die zweite Bohrungserweiterung 56 im Brillenglas 4 derart ausgebildet ist, daß sie je nach Verlauf und Krümmung der Rückseite des Brillenglases bezüglich dieser Rückseite 8 eine unterschiedliche Lage hat, jedoch bezüglich des Schenkels 24 immer die gleiche Lage hat (für einen bestimmten Öffnungswinkel).

Am vorderen Ende der Bohrung 44 wird die erste Bohrungserweiterung 46 ausgebildet. Dabei kann ein bestimmter Überstand des Verbindungselementes 42 über die Vorderseite 6 unabhängig von der Dicke des Brillenglases 8 im Bereich der Bohrung 4 vorgegeben sein; es kann aber auch eine bestimmte Länge der Bohrung 44 zwischen den beiden Bohrungserweiterungen vorgegeben sein, so daß dann die erste Bohrungserweiterung 46 bei am Rand dickeren Brillengläsern tiefer und bei am Rand dünneren Gläsern flacher ist.

Nach Ausbildung des Brillenglases mit der Bohrung 44 und deren beiden Bohrungserweiterungen 46 und 56 wird das Brillenglas so an die Backe 2 gesetzt, daß sich die in den Figuren 1, 2 und 4 dargestellte Relativlage ergibt, wobei die Zwischenauflage aus den Zwischenschichten 58 und 64 zwischengefügt wird. Danach wird dann der Stift 41 von der Vorderseite 6 des Brillenglases 4 aus in die Bohrung 44 und die Öffnung 50 eingeführt. (Allerdings kann auch zunächst der Stift 40 in die Bohrung 44 eingeführt werden, bevor der Stift 40 zusammen mit dem Brillenglas 4 in Verbindung mit der Backe 2 gebracht wird.) Der Stift 40 wird so weit kräftig in die Öffnung 50 eingedrückt, daß das Brillenglas 4 unter gewisser Zusammendrückung der beiden Zwischenschichten 58 und 64 spielfrei zwischen dem Verbindungselement 42 und dem ersten Vorsprung 54 eingespannt ist. Danach wird dann das aus der Öffnung 50 unten vorstehende Ende des Stiftes 40 entfernt.

Durch das Einspannen des Brillenglases 4 zwischen dem Verbindungselement 42 und dem Vorsprung 54 sind das Brillenglas 4 und die Backe 2 relativ zueinander in Richtung der Achse des Stiftes 40 festgelegt. Diese Einspannung verhindert zugleich auch jegliche Relativdrehung zwischen der Backe 2 und dem Brillenglas 4 um eine zur letztgenannten Achse senkrechte Achse. Diese Befestigung ist erreicht, ohne daß sich die Krümmungen der Vorderseite 6 und Rückseite 8 ungünstig auswirken können. Weder bestimmt die Krümmung der Rückseite 8 den Verlauf des Schenkels 24 und somit den Öffnungswinkel der Brille, noch bedingt die Krümmung der Vorderseite 6 eine Abknickung des Stiftes 40 oder gar einen exzentrischen Punktkontakt des Verbindungselementes 42 mit dem Brillenglas 4. Wichtige Voraussetzung für diese günstige Eigenschaft ist, daß für die Einspannung des Brillenglases zwischen dem Verbindungselement 42 und dem Schenkel 24 nicht die Vorderseite 6 und/oder die Rückseite 8 des Brillenglases herangezogen sind, sondern alleine die zwei Bohrungserweiterungen 46 und 56, die mit dem komplementär geformten Verbindungselement 42 bzw. dem komplementär geformten ersten Vorsprung 45 zusammenwirken.

Die durch die vorstehend beschriebene Einspannung zwischen dem Verbindungselement 42 und dem ersten Vorsprung 54 noch nicht verhinderte Drehung um die Achse des Stiftes 40 bzw. der Öffnung 50 wird durch die Drehsicherung in Form des zweiten Vorsprungs 60 und des dritten Vorsprungs 62 verhindert, die aufgrund ihres verhältnismäßig großen Abstandes von der letztgenannten Achse einer Drehung um diese ein erhebliches Moment entgegensetzen können. Die beschriebene Befestigungsvorrichtung bildet somit mit den drei Vorsprüngen 54, 60 und 62 sowie dem Verbindungselement 42 eine Vierpunktlagerung für das Brillenglas 4 an der Backe 2 bzw. umgekehrt. Durch die zusätzliche Abstützung der Kante 14 an der Backe 2 wird die gesamte vorstehend beschriebene Verbindung verspannt, was zu einer gewissen Biegebeanspruchung des Stiftes 40 führt und dadurch die Einheit aus Backe 2 und Brillenglas 4 versteift.

Beim vorstehend beschriebenen Ausführungsbeispiel ist die aus den beiden Zwischenschichten 58 und 64 gebildete Zwischenauflage vorgesehen, die, da sie aus einem elastisch nachgiebigen Werkstoff gefertigt ist, Spannungskonzentrationen vorbeugt und somit die Funktion eines Polsters hat und auch als solches bezeichnet werden kann. Zusätzlich kann diese Zwischenauflage dazu benutzt werden, die Ausrichtung des Brillenglases 4 relativ zum Bauteil in Form der Backe 2 zu beeinflussen. Wie sich aus der vorstehenden Beschreibung ergibt, findet der eigentliche Kontakt zwischen dem ersten Vorsprung 54 und der Bohrungserweiterung 56 an der Oberfläche der Zwischenschicht 58 statt. In welchem Abstand vom übrigen Schenkel 24 der Vorsprung 54 das Brillenglas 4 an der Bohrungserweiterung 56 abstützt, hängt somit von der Lage der vorstehend genannten Oberfläche der Zwischenschicht 58 ab. Es können nun in Verbindung mit einem ansonsten unveränderten Bauteil in Form der Backe 2 Zwischenauflagen zur Anwendung kommen, die im Bereich der Zwischenschicht 58 unterschiedliche Dicken in Richtung der Achse der Bohrung 50 haben. In Fig. 9 ist eine solche Zwischenauflage dargestellt, die im Bereich der Zwischenschicht 58 dicker ist, als die in Fig. 1 dargestellte Zwischenschicht. Darüberhinaus weist die in Fig. 9 dargestellte Zwischenauflage eine weitere Zwischenschicht 84 auf, die zwischen dem zweiten und dritten Vorsprung 60 bzw. 62 einerseits und dem Rand 10 des Brillenglases 4 andererseits im montierten Zustand angeordnet ist, wie dies weiter vorstehend bereits als Möglichkeit angedeutet ist. Wenn die in Fig. 9 dargestellte Zwischenauflage statt der in Fig. 1 dargestellte Zwischenauflage eingesetzt würde, ergäbe sich eine Ausrichtung zwischen dem Brillenglas 4 und der Backe 2, bei der die Backe 2 relativ zur in Fig. 1 dargestellten Lage im Gegenuhrzeigersinn etwas verschwenkt wäre. Dies bedeutet mit anderen Worten, daß der Öffnungswinkel größer wäre. In beschriebener Weise unterschiedlich dicke Zwischenauflagen ermöglichen es somit, bei ansonsten gleicher Geometrie des Brillenglases 4 einschließlich seiner Bohrungserweiterung 56 und der Backe 2, unterschiedliche Öffnungswinkel einzustellen.

Diese Möglichkeit der Einflußnahme mit Hilfe der Zwischenauflage bzw. des Polsters kann besonders dazu ausgenutzt werden, den Kern des Vorsprungs 54 am Schenkel 24 verhältnismäßig flach auszubilden und durch die Zwischenauflage auf die gewünschte Höhe bzw. Erstreckung in Richtung der Achse der Bohrung 50 zu bringen. Dies ermöglicht es, auch solche Gläser zu berücksichtigen, bei denen die für einen « normalen » Vorsprung 54 ausgebildete Bohrungserweiterung 56 unter Beachtung der Randdicke des Brillenglases zu tief in demselben liegen würde oder nicht tief genug in diese eindringen würde.

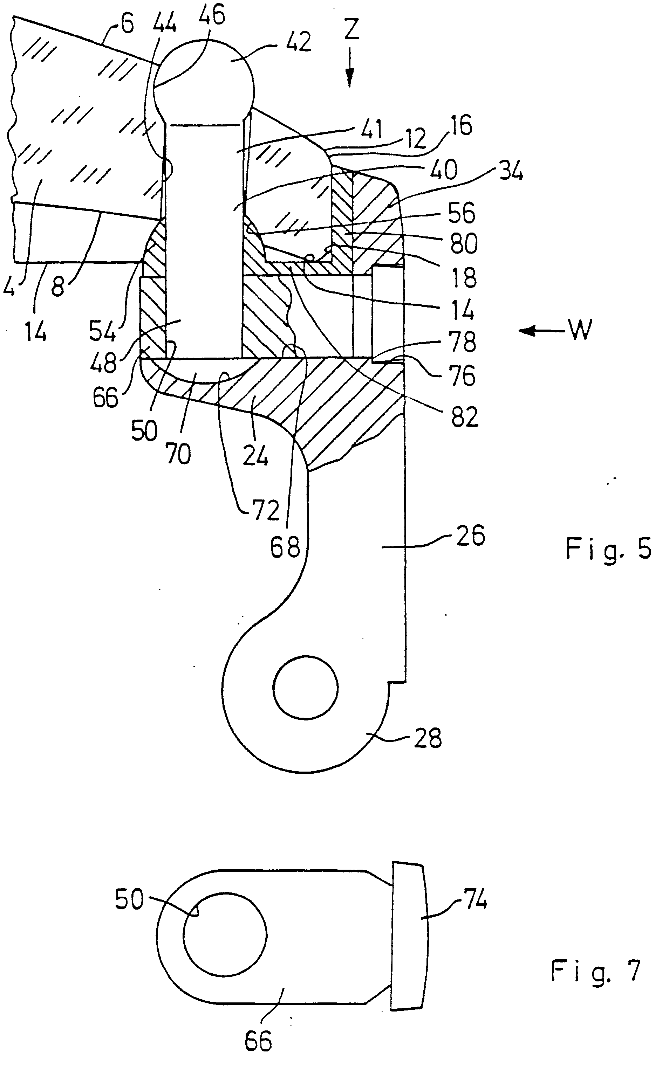

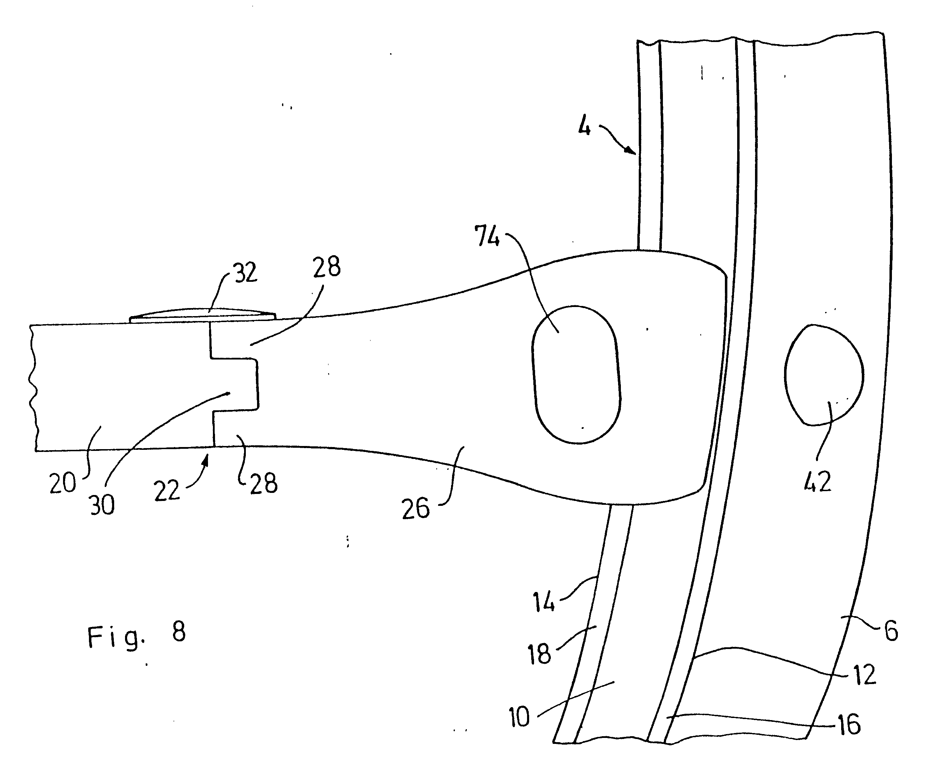

Im folgenden wird das Ausführungsbeispiel gemäß der Figuren 5 bis 8 erläutert, das teilweise mit dem vorstehend beschriebenen Ausführungsbeispiel übereinstimmt. Soweit die Übereinstimmung reicht, sind für gleiche Elemente des zweiten Ausführungsbeispiels gleiche Bezugszeichen wie bei dem ersten Ausführungsbeispiel verwendet und wird das zweite Ausführungsbeispiel nicht erneut erläutert. Im folgenden werden daher lediglich diejenigen Merkmale des zweiten Ausführungsbeispieles beschrieben, durch die es sich vom ersten unterscheidet.

Bei dem zweiten Ausführungsbeispiel umfaßt die Backe 2 ein Verankerungsteil 66, das im wesentlichen die Form eines länglichen Quaders hat (siehe Fig. 7). Dieses Verankerungsteil 66 sitzt in einer Nut 68 der Backe 2, deren Nutgrund im wesentlichen parallel zur Brillenglasebene verläuft. Die Nut 68 ist zur Rückseite 8 des Brillenglases 4 sowie nach links (in Fig. 5) offen. Im Verankerungsteil 66 ist die Öffnung 50 zur Aufnahme des zweiten Endabschnitts 48 des Stiftes 41 ausgebildet. Funktion des Verankerungsteils 66 ist, daß an ihm der Stift 41 unmittelbar verankert wird und daß durch Befestigen des Verankerungsteils 66 an der übrigen Backe 2 der Stift 41 mittelbar am übrigen Einzelteil in Form der Backe 2 befestigt wird.

Die Befestigung des zweiten Endabschnitts 48 des Stiftes 41 in der Öffnung 50 kann auf beliebige Weise erfolgen, beispielsweise so, wie dies für das erste Ausführungsbeispiel beschrieben ist. Beim zweiten Ausführungsbeispiel gemäß den Figuren 5 bis 8 ist eine Nietverbindung vorgesehen. Dementsprechend ist die Öffnung 50 als glatte Durchgangsbohrung ausgebildet und ist das freie Ende des Stiftes 41 zu einem Nietkopf 70 abgeflacht. Im Schenkel 24 ist eine Ausnehmung 72 ausgebildet, die groß genug ist, um den Nietkopf 70 aufzunehmen, wenn das Verankerungsteil 66 in seiner Nut 68 sitzt.

Zur festen Verbindung zwischen dem Verankerungteil 66 und dem übrigen Einzelteil ist eine Rastverbindung vorgesehen, die einem am in Fig. 7 rechten Ende des Verankerungsteils 66 ausgebildeten Rastkopf 74 sowie ein diesem angepaßtes Rastloch 76 im Arm 26 umfaßt. Das Rastloch 76 weist eine umlaufende Schulter 78 auf, die in Eingriff mit der Unterseite des Rastkopfes 74 treten kann und dadurch ein Verschieben des Verankerungsteils 66 nach links in Fig. 5 verhindert, sobald der Rastkopf 74 so weit nach rechts in Fig. 5 geschoben worden ist, daß er die Schulter 78 hintergreift.

Während bei dem ersten Ausführungsbeispiel der erste Vorsprung 54 unmittelbar am Schenkel 24 angeformt ist, ist er beim zweiten Ausführungsbeispiel gemäß den Figuren 5 bis 8 getrennt davon ausgebildet. Ferner sind beim zweiten Ausführungsbeispiel der zweite Vorsprung 60 und der dritte Vorsprung 62 nicht unmittelbar an der Verlängerung 34 angeformt, sondern als Enden einer kleinen Platte 80 ausgebildet, die entlang dem Rand 10 an diesem anliegend verläuft. Die Platte 80 ist einstückig mit dem ersten Vorsprung 54 ausgebildet und bildet zusammen mit diesem ein separates Bauteil 82, das sich einerseits nach rechts (in Fig. 5) an der Verlängerung 34 und andererseits nach unten (in Fig. 5) am Schenkel 24 abstützt, zu dem das Verankerungsteil 66 gehört.

Das Bauteil 82 kann auf ähnliche Weise wie die Zwischenauflage aus den Zwischenschichten 58 und 64 und gegebenenfalls 84 des ersten Ausführungsbeispiels aus einem elastisch nachgiebigen Werkstoff gefertigt sein und dann zugleich die Polsterfunktion der Zwischenauflage des ersten Ausführungsbeispiels erfüllen. Die Festigkeit des elastisch nachgiebigen Werkstoffs wird dabei vorzugsweise unter den Gesichtspunkten gewählt, daß einerseits ausreichende Weichheit vorhanden ist, um Fertigungstoleranzen und Ungenauigkeiten aufzufangen sowie Spannungsspitzen vorzubeugen und daß andererseits die Formbeständigkeit auch im montierten Zustand ausreicht, um eine hinreichend steife Verbindung zwischen dem Brillenglas und dem Bauteil zu gewährleisten. Dies kann in der Praxis bedeuten, daß bei dünnen und/oder kleinen Brillengläsern, die ein geringes Gewicht haben, ein weicherer Werkstoff zur Anwendung kommt als bei dickeren und/oder größeren Brillengläsern, die ein größeres Gewicht haben. Diese Angaben zum Werkstoff gelten entsprechend auch für die Zwischenauflage des ersten Ausführungsbeispiels.

Während der Montage des zweiten Ausführungsbeispiels werden zunächst das Brillenglas 4 und das Verankerungsteil 66 unter Zwischenfügung des Bauteils 82 zusammengesetzt und mit Hilfe des Stiftes 41 fest miteinander verbunden, wobei der Stift 41 mit dem Nietkopf 70 versehen wird. Danach wird dann die auf diese Weise geschaffene Einheit aus dem Brillenglas 4, dem Stift 41, dem Verankerungsteil 66 und dem Bauteil 82 mit der übrigen Backe zusammengefügt, indem das Verankerungsteil 66 in die Nut 68 eingeführt wird und so weit nach rechts (in Fig. 5) gedrückt wird, bis der Rastkopf 74 mit dem Rastloch 76 in Eingriff getreten ist. Diese Verbindung zwischen dem Verankerungsteil 66 und der übrigen Backe kann zusätzlich durch Zugabe von Klebstoff gesichert werden. Besonderer Vorteil der zweiten Ausführungsform gemäß den Figuren 5 bis 8 ist, daß die Verankerung des Stiftes 41 in der Öffnung 50 unbehindert durch andere Elemente des Einzelteils bzw. der Backe 2 vorgenommen werden kann. Beispielsweise beim ersten Ausführungsbeispiel müssen der Schenkel 24 und der Arm 26 hinreichend freien Raum lassen, um das vorstehende Ende des zweiten Endabschnitts 48 entfernen zu können. Diese Notwendigkeit besteht bei dem zweiten Ausführungsbeispiel gemäß den Figuren 5 bis 8 nicht. Dies bedeutet, daß das Einzelteil bzw. die Backe 2 gestaltet werden kann, ohne daß im Bereich des freien Endes des zweiten Endabschnitts Raum freigehalten zu werden braucht.

In Fig. 5 ist ferner erkennbar, daß die Achsen des Stiftes 40 und der Öffnung 50 einerseits und die Achse der Bohrung 44 andererseits nicht zusammenfallen müssen. Vielmehr können diese auch einen spitzen Winkel einschließen und/oder relativ zueinander parallel versetzt sein. Außerdem kann die Bohrung 44 einen größeren Durchmesser haben als der Endabschnitt 41, wie ebenfalls in Fig. 5 erkennbar ist. Ein solches Übermaß ist sogar vorzuziehen, damit sich der Stift 40 in der Bohrung 44 innerhalb gewisser Grenzenfrei einstellen kann. Die vorstehend erläuterte Ausbildung der Bohrung 44 ist möglich, weil nicht durch den Verlauf der Bohrung 44 sondern durch die Bohrungserweiterungen 46 und 56 im Zusammenwirken mit dem Verbindungselement 42 sowie dem Vorsprung 54 die Ausrichtung des Bauteils relativ zum Brillenglas 4 bestimmt ist.

Abweichend vom ersten Ausführungsbeispiel brauchen die Bohrungserweiterungen 46 und 56 auch nicht konzentrisch zur Bohrungsachse der Bohrung 44 ausgebildet zu sein. Vielmehr können sie auch exzentrisch bezüglich dieser Bohrungsachse ausgebildet sein, wie dies beim zweiten Ausführungsbeispiel in Fig. 5 gezeigt ist. Dabei kann durch das Ausmaß und die Richtung der Exzentrizität Einfluß auf die Ausrichtung des Bauteils relativ zum Brillenglas genommen werden. Wie Fig. 5 ohne weiteres erkennen läßt, würde eine Verlagerung der Bohrungserweiterung 56 nach rechts in Fig. 5 relativ zur dort dargestellten Bohrungserweiterung 56 und somit relativ zur Achse der Bohrung 44 zu einem größeren Öffnungswinkel führen, während eine Verlagerung in entgegengesetzter Richtung zu einem kleineren Öffnungswinkel führen würde. Eine Verlagerung der Bohrungserweiterung 56 senkrecht zur Zeichenebene aus der dargestellten Stellung der Bohrungserweiterung 56 würde auf entsprechende Weise den Inklinationswinkel ändern. Diese Möglichkeiten der Beeinflussung der Ausrichtung des Einzelteils in Form der Backe 2 relativ zum Brillenglas 4 können bei der praktischen Herstellung der Brille dazu ausgenutzt werden, bei gegebenem Einzelteil einschließlich gegebenem Bauteil 82 bzw. gegebener Zwischenauflage den Öffnungswinkel durch die Tiefe der Bohrungserweiterung 56 festzulegen und den Inklinationswinkel durch die Exzentrizität dieser Bohrungserweiterung relativ zur Bohrung 44 senkrecht zur Zeichenebene von Fig. 5.

Als Werkstoffe für alle Elemente des Einzelteils bzw. der Backe und für den Stift kommen sowohl Kunststoffe als auch — mit Ausnahme der elastischen Zwischenauflage des ersten Ausführungsbeispiels und des gegebenenfalls ebenfalls elastischen Bauteils 82 des zweiten Ausführungsbeispiels — metallische Werkstoffe in Frage. Vorzugsweise kommen jedoch ausschließlich Kunststoffe zur Anwendung.

## Patentansprüche

1. Brille mit einer Befestigungsvorrichtung zum Verbinden eines Einzelteils in Form einer Brücke, Backe oder eines Bügel-Gelenkstücks (2) einer Brillenfassung mit einem Brillenglas (4), wobei in Randnähe des Brillenglases eine Bohrung (44) ausgebildet ist und die Befestigungsvorrichtung einen Stift (40), der durch die Bohrung verläuft, und ein Kopfteil (42) aufweist, das mit dem einen, ersten Endabschnitt des Stiftes verbunden ist, dadurch gekennzeichnet, daß am Einzelteil ein ungefähr parallel zur Brillenglasebene verlaufender Schenkel (24) fest angebracht ist, mit dem der andere, zweite Endabschnitt (48) des Stiftes verbunden ist und an dem das Brillenglas auf seiner vom Kopfteil abgewandten Seite abgestützt ist, daß sowohl auf der Vorderseite (6) als auch auf der Rückseite (8) des Brillenglases (4) an den beiden Enden der Bohrung (44) jeweils eine Bohrungserweiterung (46, 56) ausgebildet ist, daß das Kopfteil (42) in eine erste (46) dieser Bohrungserweiterungen eingreift, daß am Schenkel (24) ein von diesem zum Brillenglas gerichteter erster Vorsprung (54) angeordnet ist, der in die zweite Bohrungserweiterung (56) eingreift, so daß das Brillenglas zwischen dem Kopfteil und dem ersten Vorsprung eingespannt und an den Oberflächen der beiden Bohrungserweiterungen gehalten ist, und daß eine Drehsicherung, die eine Drehung des Einzelteils relativ zum Brillenglas um die Stiftachse verhindert, einen zweiten und einen dritten, am Einzelteil festen Vorsprung (60, 62) umfaßt, wobei diese Vorsprünge am der Bohrung benachbarten Rand (10) des Brillenglases anliegen, in Umfangsrichtung des Brillenglases Abstand voneinander haben und auf der einen und der anderen Seite eines Randpunktes (A) liegen, der der Bohrung (44) am nächsten liegt.

2. Brille nach Anspruch 1, dadurch gekennzeichnet, daß zumindest eine der beiden Bohrungserweiterungen (46, 56) zur Bohrungsachse konzentrisch ist.

3. Brille nach Anspruch 1, dadurch gekennzeichnet, daß zumindest eine der beiden Bohrungserweiterungen (46, 56) bezüglich der Bohrungsachse exzentrisch ausgebildet ist.

4. Brille nach einem der Ansprüche 1 bis 3, dadurch gekennzeichnet, daß die erste Bohrungserweiterung (46) und/oder der in dieser sitzende Abschnitt des Kopfteils (42) rotationssymmetrische Oberflächen haben.

5. Brille nach Anspruch 4, dadurch gekennzeichnet, daß die Oberflächen Kugelflächenabschnitte sind.

6. Brille nach Anspruch 5, dadurch gekennzeichnet, daß auch die von der ersten Bohrungserweiterung (46) abgewandte Oberfläche des Kopfteils (42) ein Kugelflächenabschnitt ist.

7. Brille nach einem der Ansprüche 1 bis 6, dadurch gekennzeichnet, daß die zweite Bohrungserweiterung (56) und/oder der in dieser sitzende Abschnitt des ersten Vorsprungs (54) rotationssymmetrische Oberflächen haben.

8. Brille nach Anspruch 7, dadurch gekennzeichnet, daß die Oberfläche der zweiten Bohrungserweiterung (56) bzw. des Abschnitts des ersten Vorsprungs (54) Kugelflächenabschnitte sind.

9. Brille nach einem der Ansprüche 1 bis 8, dadurch gekennzeichnet, daß zwischen dem ersten Vorsprung (54) und der zweiten Bohrungserweiterung (56) eine erste Zwischenschicht (58) aus weichem Material angeordnet ist.

10. Brille nach einem der Ansprüche 1 bis 9, dadurch gekennzeichnet, daß zwischen dem zweiten und dritten Vorsprung (60, 62) einerseits und dem Rand (10) des Brillenglases (4) andererseits eine zweite Zwischenschicht (84) aus weichem Material angeordnet ist.

11. Brille nach den Ansprüchen 9 und 10, dadurch gekennzeichnet, daß die erste und die zweite Zwischenschicht (58) in Form einer Zwischenauflage einstückig ausgebildet sind, die zusätzlich am Schenkel (24) anliegt.

12. Brille nach einem der Ansprüche 9 bis 11, dadurch gekennzeichnet, daß die erste Zwischenschicht (58) aus einem elastisch nachgiebigem Werkstoff gefertigt ist.

13. Brille nach einem der Ansprüche 1 bis 12, dadurch gekennzeichnet, daß das Kopfteil (42) und der Stift (41) einstückig miteinander ausgebildet sind.

14. Brille nach einem der Ansprüche 1 bis 13, dadurch gekennzeichnet, daß das Kopfteil (42) und die erste Bohrungserweiterung (46) auf der Vorderseite (6) des Brillenglases (4) angeordnet sind und daß der Schenkel (24) des Einzelteils (2) auf der Rückseite (8) des Brillenglases (4) verläuft.

15. Brille nach einem der Ansprüche 1 bis 14, dadurch gekennzeichnet, daß der Stift (41) und der Schenkel (24) getrennt voneinander ausgebildet sind und daß der zweite Endabschnitt (48) in einer Öffnung (50) des Schenkels (24) sitzt.

16. Brille nach einem der Ansprüche 1 bis 14, dadurch gekennzeichnet, daß der Stift (41) und der Schenkel (24) getrennt voneinander ausgebildet sind und daß der Schenkel ganz oder teilweise aus einem Verankerungsteil (66) besteht, das vom übrigen Einzelteil (2) getrennt ausgebildet und damit jedoch verbunden ist, und daß der zweite Endabschnitt (48) in einer Öffnung (50) des Verankerungsteils (66) sitzt.

17. Brille nach Anspruch 16, dadurch gekennzeichnet, daß das Verankerungsteil (66) ein längliches Element ist, das im wesentlichen parallel zur Brillenglasebene verläuft und an seinem einen Ende mit dem übrigen Einzelteil (2) mittels einer Rastverbindung (76, 78) verbunden ist.

18. Brille nach einem der Ansprüche 15 bis 17, dadurch gekennzeichnet, daß die Verbindung zwischen dem zweiten Endabschnitt (48) des Stiftes (41) und dem Schenkel (24) bzw. Verankerungsteil (66) eine Schraubverbindung ist.

19. Brille nach einem der Ansprüche 15 bis 17, dadurch gekennzeichnet, daß die Verbindung zwischen dem zweiten Endabschnitt (48) des Stiftes (41) und dem Schenkel (24) bzw. Verankerungsteil (66) eine Klebeverbindung ist.

20. Brille nach einem der Ansprüche 15 bis 17, dadurch gekennzeichnet, daß die Verbindung zwischen dem zweiten Endabschnitt (48) des Stiftes (41) und dem Schenkel (24) bzw. Verankerungsteil (66) eine Rastverbindung ist.

21. Brille nach Anspruch 20, dadurch gekennzeichnet, daß zumindest ein Rastvorsprung (52) nur am zweiten Endabschnitt (48) des Stiftes oder nur der dafür bestimmten Öffnung (50) im Schenkel (24) bzw. Verankerungsteil (66) ausgebildet sind, wobei das jeweils andere Element (Öffnung oder zweiter Endabschnitt) vor dem Verbinden eine glatte Oberfläche aufweist.

22. Brille nach einem der Ansprüche 15 bis 17, dadurch gekennzeichnet, daß die Öffnung (50) für den zweiten Endabschnitt (48) eine Durchgangsbohrung ist und daß das aus der Durchgangsbohrung frei vorstehende Ende des zweiten Endabschnitts (48) zu einem Nietkopf (70) abgeflacht ist.

23. Brille nach einem der Ansprüche 1 bis 22, dadurch gekennzeichnet, daß der erste Vorsprung (54) und der Schenkel (24) des Einzelteils (2) einstückig miteinander ausgebildet sind.

24. Brille nach einem der Ansprüche 1 bis 23, dadurch gekennzeichnet, daß der zweite und der dritte Vorsprung (60, 62) jeweils kegel- oder kugelabschnittförmig ausgebildet sind.

25. Brille nach einem der Ansprüche 1 bis 23, dadurch gekennzeichnet, daß der zweite und der dritte Vorsprung (60, 62) jeweils als Leiste ausgebildet sind, die im wesentlichen senkrecht zur Brillenglasebene verläuft.

26. Brille nach einem der Ansprüche 1 bis 23, dadurch gekennzeichnet, daß der zweite und der dritte Vorsprung (60, 62) durch eine am Rand (10) anliegende Fläche miteinander verbunden sind.

27. Brille nach einem der Ansprüche 1 bis 26, dadurch gekennzeichnet, daß das Brillenglas (4) mit seiner dem Schenkel (24) zugewandten Kante (14) am Übergang zwischen dem Rand (10) und der Vorderseite (6) bzw. Rückseite (8) des Brillenglases (4) zusätzlich am Schenkel (24) anliegt.

28. Brille nach Anspruch 27, dadurch gekennzeichnet, daß die zweite Bohrungserweiterung (56) je nach Krümmung des Brillenglases (4) verschieden tief ist, sodaß die Lage des Schenkels (24) bezüglich der Kante (14) konstant bleibt.

29. Brille nach einem der Ansprüche 1 bis 28, dadurch gekennzeichnet, daß der Stift (41), das Kopfteil (42) und das Einzelteil (2) aus Kunststoff gefertigt sind.

## Claims

1. Spectacles having a mounting device for connecting a component part in the form of a bridge, temple or a bow hinge piece (2) of a spectacle frame to a spectacle lens (4), a bore (44) being formed in the vicinity of the rim of the spectacle lens and the mounting device having a pin (40), which extends through the bore, and a head part (42), which is connected to one, first end section of the pin, characterized in that a limb (24) which extends approximately parallel to the plane of the spectacle lens, to which the other, second end section (48) of the pin is connected and on which the spectacle lens is supported on its side facing away from the head part, is arranged fixedly on the component part, in that a bore enlargement (46, 56) is in each case formed on the front side (6) and on the rear side (8) of the spectacle lens (4) at each end of the bore (44), in that the head part (42) engages in a first (46) of these bore enlargements, in that a first projection (54) is arranged on the limb (24), which projection is directed away from said limb towards the spectacle lens and engages in the second bore enlargement (56), with the result that the spectacle lens is clamped between the head part and the first projection and is held at the surfaces of the two bore enlargements, and in that an anti-rotation means which prevents a rotation of the component part relative to the spectacle lens, about the axis of the pin, comprises a second and a third projection (60, 62) fixed in relation to the component part, these projections resting against the spectacle lens rim (10) adjacent to the bore, being at a distance from one another in the circumferential direction of the spectacle lens and lying on either side of a point (A) on the rim which is nearest to the bore (44).

2. Spectacles according to Claim 1, characterized in that at least one of the two bore enlargements (46, 56) is concentric to the bore axis.

3. Spectacles according to Claim 1, characterized in that at least one of the two bore enlargements (46, 56) is formed eccentrically with respect to the bore axis.

4. Spectacles according to one of Claims 1 to 3, characterized in that the first bore enlargement (46) and/or that section of the head part (42) which is seated in said enlargement have rotationally symmetrical surfaces.

5. Spectacles according to Claim 4, characterized in that the surfaces are segments of a spherical surface.

6. Spectacles according to Claim 5, characterized in that that surface of the head part (42) which faces away from the first bore enlargement (46) is also a segment of a spherical surface.

7. Spectacles according to one of Claims 1 to 6, characterized in that the second bore enlargement (56) and/or that section of the first projection (54) which is seated in said enlargement have rotationally symmetrical surfaces.

8. Spectacles according to Claim 7, characterized in that the surface of the second bore enlargement (56) and of the section of the first projection (54) are segments of a sphere.

9. Spectacles according to one of Claims 1 to 8, characterized in that a first intermediate layer (58) of soft material is arranged between the first projection (54) and the second bore enlargement (56).

10. Spectacles according to one of Claims 1 to 9, characterized in that a second intermediate layer (84) of soft material is arranged between the second and third projection (60, 62) on the one hand and the rim (10) of the spectacle lens (4) on the other hand.

11. Spectacles according to Claims 9 and 10, characterized in that the first and the second intermediate layer (58) are formed integrally in the form of an intermediate rest which additionally rests on the limb (24).

12. Spectacles according to one of Claims 9 to 11, characterized in that the first intermediate layer (58) is manufactured from a resiliently yielding material.

13. Spectacles according to one of Claims 1 to 12, characterized in that the head part (42) and the pin (41) are formed integrally with one another.

14. Spectacles according to one of Claims 1 to 13, characterized in that the head part (42) and the first bore enlargement (46) are arranged on the front side (6) of the spectacle lens (4) and in that the limb (24) of the component part (2) extends on the rear side (8) of the spectacle lens (4).

15. Spectacles according to one of Claims 1 to 14, characterized in that the pin (41) and the limb (24) are formed separately from one another and in that the second end section (48) is seated in an opening (50) of the limb (24).

16. Spectacles according to one of Claims 1 to 14, characterized in that the pin (41) and the limb (24) are formed separately from one another and in that the limb consists wholly or partially of an anchoring part (66) which is formed separately from the remainder of the component part (2) but is connected to it, and in that the second end section (48) is seated in an opening (50) of the anchoring part (66).

17. Spectacles according to Claim 16, characterized in that the anchoring part (66) is an elongate element which extends essentially parallel to the plane of the spectacle lens and is connected at one end to the remainder of the component part (2) by means of a lock-in connection (76, 78).

18. Spectacles according to one of Claims 15 to 17, characterized in that the connection between the second end section (48) of the pin (41) and the limb (24) or anchoring part (66) is a screwed connection.

19. Spectacles according to one of Claims 15 to 17, characterized in that the connection between the second end section (48) of the pin (41) and the limb (24) or anchoring part (66) is an adhesive bond.

20. Spectacles according to one of Claims 15 to 17, characterized in that the connection between the second end section (48) of the end (41) and the limb (24) or anchoring part (66) is a lock-in connection.

21. Spectacles according to Claim 20, characterized in that at least one lock-in projection (52) is formed only on the second end section (48) of the pin or only on the opening (50) intended for it in the limb (24) or anchoring part (66), the other element in each case (opening or second end section) having a smooth surface prior to connection.

22. Spectacles according to one of Claims 15 to 17, characterized in that the opening (50) for the second end section (48) is a through bore and in that that end of the second end section (48) which protrudes from the through bore is flattened to form a rivet head (70).

23. Spectacles according to one of Claims 1 to 22, characterized in that the first projection (54) and the limb (24) of the component part (2) are formed integrally with one another.

24. Spectacles according to one of Claims 1 to 23, characterized in that the second and the third projection (60, 62) are in each case formed in the shape of a segment of a cone or a sphere.

25. Spectacles according to one of Claims 1 to 23, characterized in that the second and the third projection (60, 62) are in each case formed as a strip which extends essentially perpendicular to the plane of the spectacle lens.

26. Spectacles according to one of Claims 1 to 23, characterized in that the second and the third projection (60, 62) are connected to one another by a surface resting on the rim (10).

27. Spectacles according to one of Claims 1 to 26, characterized in that, at the transition between the rim (10) and the front side (6) and rear side (8) of the spectacle lens (4), the spectacle lens (4) additionally rests by its edge (14) facing the limb (24) on the limb (24).

28. Spectacles according to Claim 27, characterized in that, depending on the curvature of the spectacle lens (4), the second bore enlargement (56) is of varying depth so that the position of the limb (24) with respect to the edge (14) remains constant.

29. Spectacles according to one of Claims 1 to 28, characterized in that the pin (41), the head part (42) and the component part (2) are manufactured from plastic.

## Revendications

1. Lunette comportant un dispositif de fixation pour relier un élément individuel sous forme d'arcade, de joue ou d'articulation de branche (2) d'une monture de lunette à un verre de lunette (4), un alésage (44) étant formé à proximité du bord du verre de lunette, le dispositif de fixation comportant une tige (40) passant par l'alésage et une tête (42) qui est reliée à une première portion terminale de la tige, caractérisée en ce qu'on fixe à demeure sur l'élément individuel une branche (24) approximativement parallèle au plan du verre, à laquelle est reliée la deuxième portion terminale (48) de la tige, et sur laquelle s'appuie le verre de lunette par son côté opposé à la tête, en ce qu'on forme aussi bien sur le côté antérieur (6) que sur le côté postérieur (8) du verre de lunette (4), aux deux extrémités de l'alésage (44) respectivement un élargissement de l'alésage (46, 56), en ce que la tête (42) pénètre dans le premier (46) de ces élargissements de l'alésage, en ce qu'on dispose sur la branche (24) une première saillie (54) orientée de la branche vers le verre de lunette, qui pénètre dans le deuxième élargissement d'alésage (56), de sorte que le verre de lunette est serré entre la tête et la première saillie et est maintenu sur les surfaces des deux élargissements d'alésage, et en ce qu'un dispositif de sécurité anti-rotation, qui empêche la rotation de l'élément individuel par rapport au verre de lunette autour de l'axe de la tige, comporte une deuxième et une troisième saillie (60, 62) solidaires de l'élément individuel, ces saillies appuyant sur le bord (10) du verre de lunette voisin de l'alésage, étant écartées l'une de l'autre dans le sens périphérique du verre de lunette et situées sur l'un et l'autre côté d'un point de bord (A) qui se trouve le plus près de l'alésage (44).

2. Lunette selon la revendication 1, caractérisée en ce qu'au moins un des deux élargissements d'alésage (46, 56) est concentrique à l'axe de l'alésage.

3. Lunette selon la revendication 1, caractérisée en ce qu'au moins un des deux élargissements d'alésage (46, 56) est excentré par rapport à l'axe de l'alésage.

4. Lunette selon l'une des revendications 1 à 3, caractérisée en ce que le premier élargissement d'alésage (46) et/ou la portion de tête (42) placé dans celui-ci ont des surfaces de révolution.

5. Lunette selon la revendication 4, caractérisée en ce que les surfaces sont des portions de surfaces sphériques.

6. Lunette selon la revendication 5, caractérisée en ce que la surface de la tête (42) opposée au premier élargissement d'alésage (46) est aussi une portion de surface sphérique.

7. Lunette selon l'une des revendications 1 à 6, caractérisée en ce que le second élargissement d'alésage (56) et/ou la portion de la première saillie (54) logée dans celui-ci ont des surfaces de révolution.

8. Lunette selon la revendication 7, caractérisée en ce que la surface du second élargissement d'alésage (56) et/ou de la portion de la première saillie (54) sont des portions de surfaces sphériques.

9. Lunette selon l'une des revendications 1 à 8, caractérisée en ce qu'entre la première saillie (54) et le second élargissement d'alésage (56) est disposée une première couche intercalaire (58) en matériau souple.

10. Lunette selon l'une des revendications 1 à 9, caractérisée en ce qu'entre la deuxième saillie et la troisième saillie (60, 62) d'une part, et le bord (10) du verre de lunette (4), d'autre part, est disposée une seconde couche intercalaire (84) en matériau souple.

11. Lunette selon les revendications 9 et 10, caractérisée en ce que la première (58) et la deuxième (84) couche intercalaire sont réalisées d'une seule pièce sous forme d'une garniture intercalaire, qui appuie en plus sur la branche (24).

12. Lunette selon l'une des revendications 9 à 11, caractérisée en ce que la seconde couche intercalaire (58) est en un matériau élastiquement déformable.

13. Lunette selon l'une des revendications 1 à 12, caractérisée en ce que la tête (42) et la tige (41) sont réalisées ensemble d'une seule pièce.

14. Lunette selon l'une des revendications 1 à 13, caractérisée en ce que la tête (42) et le premier élargissement d'alésage (46) sont disposés sur le côté antérieur (6) du verre de lunette (4) et en ce que la branche (24) de l'élément individuel (2) s'étend sur le côté postérieur (8) du verre de lunette (4).

15. Lunette selon l'une des revendications 1 à 14, caractérisée en ce que la tige (41) et la branche (24) sont réalisées séparées l'une de l'autre et en ce que la seconde portion terminale (48) est logée dans une ouverture (50) de la branche (24).

16. Lunette selon l'une des revendications 1 à 14, caractérisée en ce que la tige (41) et la branche (24) sont réalisées séparées l'une de l'autre, en ce que la branche (24) est constituée en totalité ou en partie par un élément d'ancrage (66), qui est réalisé séparé du reste de l'élément individuel (2), mais est toutefois relié à celui-ci, et en ce que la deuxième portion terminale (48) est logée dans une ouverture (50) de l'élément d'ancrage (66).

17. Lunette selon la revendication 16, caractérisée en ce que l'élément d'ancrage (66) est un élément allongé qui s'étend sensiblement parallèlement au plan du verre de lunette et qui est relié à l'une de ses extrémités avec le reste de l'élément individuel (2) au moyen d'une liaison par encliquetage (76, 78).

18. Lunette selon l'une des revendications 15 à 17, caractérisée en ce que la liaison entre la deuxième portion terminale (48) de la tige (41) et la branche (24) et/ou l'élément d'ancrage (66) est une liaison par vissage.

19. Lunette selon l'une des revendications 15 à 17, caractérisée en ce que la liaison entre la deuxième portion terminale (48) de la tige (41) et la branche (24) et/ou l'élément d'ancrage (66) est une liaison par collage.

20. Lunette selon l'une des revendications 15 à 17, caractérisée en ce que la liaison entre la seconde portion terminale (48) de la tige (41) et la branche (24) et/ou l'élément d'ancrage (66) est une liaison par encliquetage.

21. Lunette selon la revendication 20, caractérisée en ce qu'au moins une saillie d'encliquetage (52) est réalisée seulement sur la seconde portion terminale (48) de la tige (41) ou seulement sur l'ouverture (50) dans la branche (24) et/ou dans l'élément d'ancrage (66) prévu pour cela, chaque autre élément (ouverture ou seconde portion terminale) comportant avant la liaison une surface lisse.

22. Lunette selon l'une des revendications 15 à 17, caractérisée en ce que l'ouverture (50) pour la seconde portion terminale (48) est un alésage traversant, et en ce que l'extrémité de la seconde portion terminale (48) dépassant librement hors de l'alésage traversant, est aplatie pour former une tête de rivet (70).

23. Lunette selon l'une des revendications 1 à 22, caractérisée en ce que la première saillie (54) et la branche (24) de l'élément individuel (2) sont réalisées ensemble d'une seule pièce.

24. Lunette selon l'une des revendications 1 à 23, caractérisée en ce que la deuxième et la troisième saillie (60, 62) sont respectivement réalisées en forme de portion de tronc de cône ou de sphère.

25. Lunette selon l'une des revendications 1 à 23, caractérisée en ce que la deuxième et la troisième saillie (60, 62) sont respectivement réalisées sous forme de bandeau qui s'étend sensiblement perpendiculairement au plan du verre de lunette.

26. Lunette selon l'une des revendications 1 à 23, caractérisée en ce que la deuxième et la troisième saillie (60, 62) sont reliées ensemble par une surface appuyant sur le bord (10).

27. Lunette selon l'une des revendications 1 à 26, caractérisée en ce que le verre de lunette (4) appuie par son arête (14) tournée vers la branche (24), à la transition entre le bord (10) et le côté antérieur (6) ou postérieur (8) du verre de lunette (4), en plus sur la branche (24).

28. Lunette selon la revendication 27, caractérisée en ce que le second élargissement d'alésage (56) a une profondeur différente selon la courbure du verre de lunette (4) de sorte que la position de la branche (24) par rapport à l'arête (14) reste constante.

29. Lunette selon l'une des revendications 1 à 28, caractérisée en ce que la tige (41), la tête (42) et l'élément individuel (2) sont fabriqués en matière plastique.

Fig. 1

Fig. 3

Fig. 9

Fig. 6

Fig. 2

Fig. 4

Fig. 5

Fig. 7

4

Fig. 8